# DEMANDE DE BREVET EUROPEEN

(11) **EP 2 899 418 A1**
(43) Date de publication de la demande: **29.07.2015**
(21) Numéro de dépôt: 14198647.1
(22) Date de dépôt: 17.12.2014
(51) Int. Cl.: F16C 33/78, F16C 19/16, F16C 33/38

(54) **Cage de roulement à billes à contact oblique et roulement associé**

(30) Priorité: 20.12.2013 FR 1363350
(71) Demandeur: NTN-SNR Roulements, 74000 Annecy (FR)
(72) Inventeur: Berthier, Julien, 74410 SAINT JORIOZ (FR)
(74) Mandataire: Bugnion Genève

(57) **Abrégé**

Une cage (24) de roulement à billes à contact oblique, comporte un anneau extérieur centré sur un axe de référence (100) de la cage et situé radialement à l'extérieur d'un cylindre géométrique (E) centré sur l'axe de référence (100), et un anneau intérieur (28) centré sur l'axe de référence (100) et situé radialement à l'intérieur du cylindre (E), l'anneau extérieur (26) et l'anneau intérieur (28) étant situés axialement à distance l'un de l'autre et reliés par des pontets (30), les pontets (30) délimitant deux à deux et avec l'anneau extérieur (26) et l'anneau intérieur (28) des alvéoles (32), chacune des alvéoles (32) ayant un centre (C) situé à une distance R de l'axe de référence (100) et constituant un centre de courbure pour une paroi concave (36) de l'anneau extérieur (26) et une paroi concave (38) de l'anneau intérieur (28), situées diamétralement en regard l'une de l'autre de part et d'autre du centre de courbure (C). Une portion (40) de l'anneau extérieur (26) est située à une distance de l'axe de référence inférieure à R, de manière à constituer un déflecteur.

## Description

### DOMAINE TECHNIQUE DE L'INVENTION

L'invention se rapporte à une cage pour roulement à billes à contact oblique et à un roulement comportant une telle cage, en particulier, bien que de manière non exclusive, pour un boîtier de direction.

### ÉTAT DE LA TECHNIQUE ANTÉRIEURE

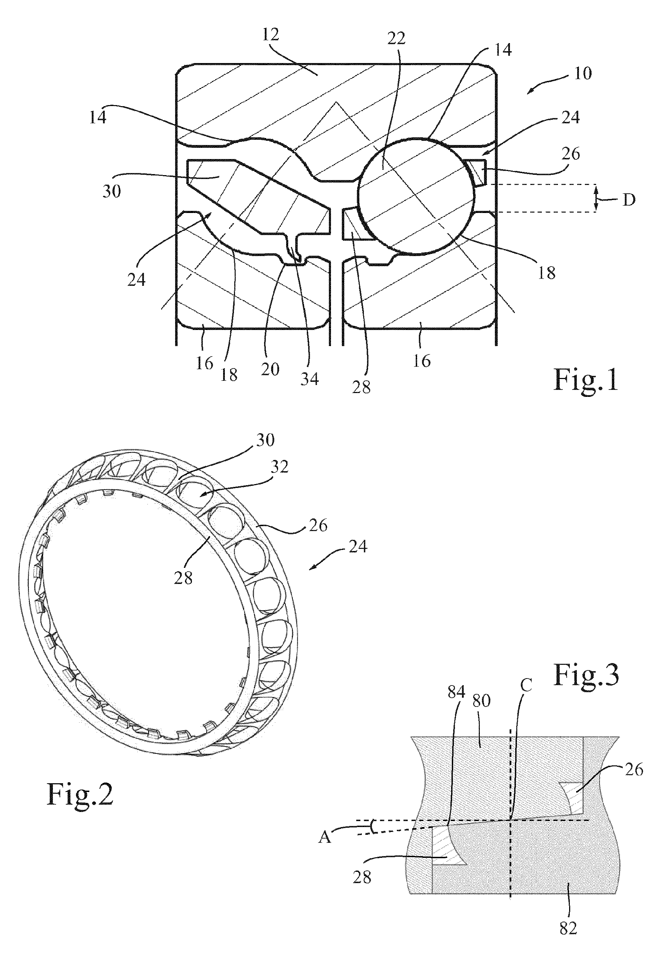

Sur la figure 1 est illustré un roulement 10 à deux rangées de billes à contact oblique de l'état de la technique, qui comporte une bague extérieure 12 à deux chemins de roulement extérieurs 14, deux bagues intérieures identiques 16, chacune présentant un chemin de roulement intérieur 18 et une gorge de retenue 20, des billes 22 réparties en deux rangées circulaires roulant sur les chemins de roulement, et deux cages identiques 24 en matière plastique destinées à retenir les billes 22. Une des cages 24 est représentée en détail sur la figure 2. Il s'agit d'une pièce monobloc, comportant un anneau extérieur 26 et un anneau intérieur 28 situés axialement à distance l'un de l'autre et reliés par des pontets 30, les pontets délimitant deux à deux et avec l'anneau extérieur et l'anneau intérieur des alvéoles 32 pour loger les billes 22 d'une même rangée. Chacun des pontets 30 présente une languette élastique 34 faisant saillie radialement vers l'intérieur.

Cette cage est fabriquée par moulage dans un moule en deux pièces 80, 82 à déplacement axial, dont un détail a été illustré sur la figure 3. Par construction, les parties des deux pièces du moule venant définir les alvéoles viennent en appui l'une contre l'autre selon une interface plane ou tronconique 84 passant par le centre C de l'alvéole et qui doit avoir un angle A minimum supérieur à 5° avec l'axe de rotation de la cage, pour éviter tout risque de coincement. Ces règles de construction traditionnelles imposent des limites au niveau des anneaux 26, 28 de la cage: ainsi, l'anneau intérieur 28 est nécessairement situé radialement à l'intérieur du plan de contact 84, et l'anneau extérieur 26 est nécessairement situé radialement à l'extérieur du plan de contact 84. Concernant spécifiquement l'anneau extérieur 26, on constate sur la figure 1 qu'il résulte du procédé de fabrication une géométrie qui se traduit par une distance D importante entre la bague intérieure 16 et l'anneau extérieur 26, d'où une sensibilité à la pollution. Pour réduire cette distance, une solution consiste à ajouter de la matière à la bague intérieure 26, mais au prix d'un surcoût de matière sans rapport avec la fonction recherchée. Une autre solution consiste à changer le mode de fabrication de la cage, en prévoyant un moule à plus de deux pièces, présentant des tiroirs latéraux. Mais cette solution se traduit par un renchérissement du moule et une baisse de cadence de fabrication.

### EXPOSÉ DE L'INVENTION

L'invention vise donc à remédier aux inconvénients de l'état de la technique, de manière à proposer une cage qui soit compatible avec un procédé de fabrication simple et qui offre une plus grande liberté de choix de forme pour les anneaux de la cage.

Selon un premier aspect de l'invention, celle-ci a trait à une cage de roulement à billes à contact oblique définissant un axe géométrique de référence, la cage comportant: un anneau extérieur centré sur l'axe de référence et situé radialement à l'extérieur d'un cylindre géométrique centré sur l'axe de référence, et un anneau intérieur centré sur l'axe de référence et situé radialement à l'intérieur du cylindre, l'anneau extérieur et l'anneau intérieur étant situés axialement à distance l'un de l'autre et reliés par des pontets, les pontets délimitant deux à deux et avec l'anneau extérieur et l'anneau intérieur des alvéoles, chacune des alvéoles ayant un centre situé à une distance R de l'axe de référence et constituant un centre de courbure pour une paroi concave de l'anneau extérieur et une paroi concave de l'anneau intérieur, situées diamétralement en regard l'une de l'autre de part et d'autre du centre de courbure, une portion de l'anneau extérieur étant située à une distance de l'axe de référence inférieure à R.

En imposant que l'anneau extérieur soit situé à l'extérieur et l'anneau intérieur à l'intérieur d'un même cylindre géométrique de référence, on s'assure que la cage peut être moulée par un moule en deux pièces à mouvement axial. En ajoutant comme contrainte supplémentaire qu'une partie de l'anneau extérieur se trouve à une distance de l'axe de référence inférieure au rayon du cercle primitif du roulement, on traduit le fait que l'interface de contact entre les deux parties du moule est décalée radialement vers l'intérieur par rapport à l'état de la technique, ce qui offre une plus grande liberté dans le choix des formes de l'anneau extérieur. Cette prolongation de l'anneau extérieur radialement vers l'intérieur permet de rapprocher l'anneau extérieur de la bague intérieure du roulement, et constitue de ce fait un déflecteur protégeant le roulement contre les pollutions extérieures.

Suivant un mode de réalisation particulièrement avantageux, l'anneau extérieur présente au niveau de chacune des alvéoles une cavité située radialement entre la paroi concave de l'anneau extérieur et l'axe géométrique de référence. Cette cavité permet un stockage et/ou une recirculation de lubrifiant dans l'alvéole. De préférence, la cavité s'étend radialement de part et d'autre d'un cylindre primitif de rayon R centré sur l'axe de référence.

Suivant un mode de réalisation préféré, l'anneau extérieur présente une collerette annulaire faisant saillie radialement vers l'extérieur, et située, au niveau de chacune des alvéoles, radialement à l'extérieur de la paroi concave de l'anneau extérieur. On s'assure ainsi d'un recouvrement entre la cage et la bague extérieure du roulement, ce qui complète la fonction de déflecteur de l'anneau extérieur.

Chacun des pontets de la cage présente de préférence une languette élastique faisant saillie radialement vers l'intérieur, afin d'accrocher la cage à une gorge de positionnement prévue à cet effet sur la bague intérieure, ce qui est utile, notamment au cours de l'assemblage.

Naturellement, la cage est de préférence en matériau plastique moulé.

Suivant un autre aspect de l'invention, celle-ci a trait à un roulement à billes à contact oblique comportant au moins une bague extérieure, au moins une bague intérieure, au moins une rangée de billes roulant sur des chemins de roulement formés sur la bague extérieure et sur la bague intérieure, et au moins une cage selon telle que décrite précédemment, retenant les billes de la rangée de billes.

Suivant un mode de réalisation, le roulement comporte deux rangées de billes et deux cages selon l'une quelconque des revendications précédentes, disposées coaxialement à distance l'une de l'autre de manière à ce que l'anneau intérieur de l'une des cages fasse face à l'anneau intérieur de l'autre des cages, chacune des cages retenant les billes d'une des rangées de billes.

Suivant un mode de réalisation, le roulement comporte une bague extérieure unique à deux chemins de roulement.

Pour faciliter l'assemblage du roulement, on peut prévoir sur la ou les bagues intérieures une gorge annulaire dans laquelle peuvent venir s'engager des languettes élastiques formées sur la cage, par exemple au niveau des pontets.

Pour améliorer la fonction de protection du roulement contre les pollutions, on peut prévoir sur la bague extérieure au moins un embrèvement, en regard de la collerette annulaire. Cet embrèvement est de préférence axialement en retrait par rapport à une face plane frontale de la bague extérieure, de manière à permettre un recouvrement radial et axial avec la collerette annulaire, et à éviter que la cage soit en saillie par rapport à la bague extérieure.

### BRÈVE DESCRIPTION DES FIGURES

Comme discuté précédemment, les figures 1 à 3 illustrent l'état de la technique. Plus spécifiquement :
- la figure 1 représente un roulement selon l'état de la technique,
- la figure 2 représente une vue isométrique d'une cage du roulement de la figure 1;
- la figure 3 représente un moule de fabrication de la cage de la figure 2.

Les figures 4 à 8 illustrent quant à elles un mode particulier de réalisation de l'invention, donné à titre d'exemple non limitatif. Plus précisément:

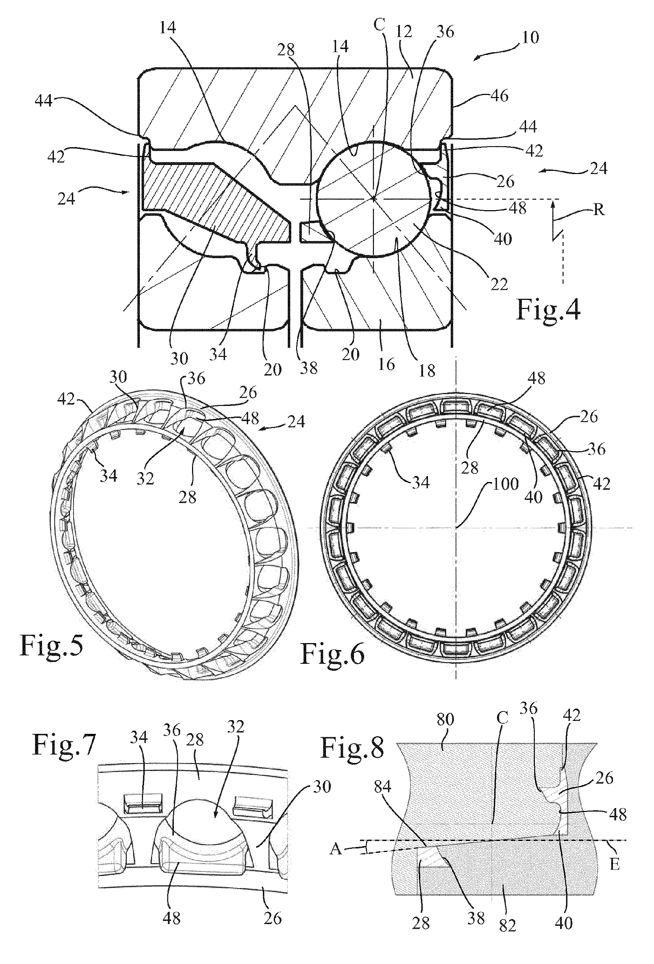

- la figure 4 représente un roulement selon l'invention,
- la figure 5 représente une vue isométrique d'une cage du roulement de la figure 4;
- la figure 6 représente une vue de face de la cage de la figure 5;
- la figure 7 représente un détail d'une alvéole de la cage de la figure 5, depuis l'intérieur de la cage;
- la figure 8 représente un moule de fabrication de la cage de la figure 5.

Pour plus de clarté, les éléments identiques sont repérés par des signes de référence identiques sur l'ensemble des figures.

### DESCRIPTION DÉTAILLÉE D'UN MODE DE RÉALISATION

En référence à la figure 4, un roulement 10 à deux rangées de billes à contact oblique selon l'invention comporte une bague extérieure 12 à deux chemins de roulement extérieurs 14, deux bagues intérieures 16, chacune présentant un chemin de roulement intérieur 18 et une gorge de retenue 20, des billes 22 réparties en deux rangées circulaires roulant sur les chemins de roulement 14, 18, et deux cages identiques 24 en matière plastique destinées à retenir les billes 22. Une des cages 24 est représentée en détail sur les figures 5 à 7. Il s'agit d'une pièce monobloc, présentant un axe de référence 100 qui est également un axe de révolution du roulement, et qui comporte un anneau extérieur 26 et un anneau intérieur 28 situés axialement à distance l'un de l'autre et reliés par des pontets 30, les pontets 30 délimitant deux à deux et avec l'anneau extérieur 26 et l'anneau intérieur 28 des alvéoles 32 pour loger les billes 22 d'une même rangée. Chacun des pontets 30 présente une languette élastique 34 faisant saillie radialement vers l'intérieur pour se loger dans une des gorges 20.

Chaque alvéole 32 a un centre C situé à une distance R de l'axe de référence et constituant un centre de courbure pour une paroi concave 36 de l'anneau extérieur 26 et une paroi concave 38 de l'anneau intérieur 28, les deux parois concaves 36, 38 étant situées diamétralement en regard l'une de l'autre de part et d'autre du centre de courbure C, de façon à retenir les billes 22. Le cercle de rayon R est dit cercle primitif du roulement. De manière remarquable, une portion 40 de l'anneau extérieur 26 est située radialement à l'intérieur du cercle primitif, à une distance de l'axe de référence inférieure à R, et vient radialement en regard et à faible distance de la bague intérieure correspondante 16. L'anneau extérieur 26 présente en outre une collerette annulaire 42 faisant saillie radialement vers l'extérieur, et située, au niveau de chacune des alvéoles 32, radialement à l'extérieur de la paroi concave 36. Cette collerette 42 se trouve logée dans un embrèvement 44 périphérique de la bague extérieure 12, en retrait par rapport à une face plane frontale 46 de la bague extérieure 12, de manière à permettre un recouvrement radial et axial entre la collerette annulaire 42 et la bague extérieure 12, et à éviter que la cage 24 soit en saillie par rapport à la bague extérieure 12.

L'anneau extérieur 26 de la cage 24 est ainsi dimensionné pour protéger l'intérieur du roulement 10 des pollutions externe. Dans la configuration de roulement à deux rangées de billes illustrée sur la figure 4, avec deux cages identiques 24 dont les anneaux intérieurs 28 se font face et dont les anneaux extérieurs 26 forment deux déflecteurs, chacun sur l'une des faces 46 du roulement, dans l'embrèvement 44, on obtient une protection complète du roulement 10.

Une cavité 48 est de préférence formée dans chaque alvéole 32 radialement entre la paroi concave 36 de l'anneau extérieur 26 et l'axe géométrique de référence 100. Cette cavité 48 s'étend radialement de part et d'autre du cercle primitif de rayon R. Elle favorise une bonne lubrification de la bille 22 dans l'alvéole 32, en constituant localement une réserve de lubrifiant et en facilitant la circulation du lubrifiant dans l'alvéole 32.

La cage 24 est fabriquée par moulage dans un moule en deux pièces 80, 82 à déplacement axial, dont un détail a été illustré sur la figure 8. On a tracé sur la figure 8 un cylindre E centré sur l'axe 100 de la cage, et séparant d'un côté, à l'intérieur du cylindre E, l'anneau intérieur 28 de la cage 24, et de l'autre côté, à l'extérieur du cylindre E, l'anneau extérieur 26. De manière remarquable, ce cylindre est situé radialement à l'intérieur du cercle primitif défini par les centres C des alvéoles.

Les parties des deux pièces 80, 82 du moule venant définir les alvéoles 32 viennent en appui l'une contre l'autre selon un plan ou un tronc de cône 84 qui fait avec l'axe de rotation de la cage un angle A de préférence supérieur à 5° pour éviter tout risque de coincement. De manière remarquable, l'interface de contact 84 entre les deux pièces 80, 82 du moule, au niveau de l'alvéole 32, est située tout entière radialement à l'intérieur du cercle primitif de rayon R. C'est en ayant ainsi modifié le positionnement radial de l'interface 84 entre les pièces 80, 82 du moule, qu'il est devenu possible de prolonger l'anneau extérieur 26 radialement vers l'intérieur par la portion 40.

Naturellement, de nombreuses variations sont possibles. Le roulement selon l'invention, s'il est à deux rangées de billes, peut ne comporter qu'une bague intérieure à deux chemins de roulement, pour autant qu'on prévoie des rainures de remplissage. La cage selon l'invention est également adaptée à des roulements à contact oblique à une seule rangée de billes.

## Revendications

1. Cage (24) de roulement à billes à contact oblique, comportant: un anneau extérieur (26) centré sur un axe de référence (100) de la cage et situé radialement à l'extérieur d'un cylindre géométrique (E) centré sur l'axe de référence (100), et un anneau intérieur (28) centré sur l'axe de référence (100) et situé radialement à l'intérieur du cylindre (E), l'anneau extérieur (26) et l'anneau intérieur (28) étant situés axialement à distance l'un de l'autre et reliés par des pontets (30), les pontets (30) délimitant deux à deux et avec l'anneau extérieur (26) et l'anneau intérieur (28) des alvéoles (32), chacune des alvéoles (32) ayant un centre (C) situé à une distance R de l'axe de référence (100) et constituant un centre de courbure pour une paroi concave (36) de l'anneau extérieur (26) et une paroi concave (38) de l'anneau intérieur (28), situées diamétralement en regard l'une de l'autre de part et d'autre du centre de courbure (C), **caractérisée en ce qu'**une portion (40) de l'anneau extérieur (26) est située à une distance de l'axe de référence inférieure à R.

2. Cage (24) selon la revendication 1, **caractérisée en ce que** l'anneau extérieur (26) présente au niveau de chacune des alvéoles (32) une cavité (48) située radialement entre la paroi concave (36) de l'anneau extérieur (26) et l'axe géométrique de référence (100).

3. Cage selon la revendication 2, **caractérisée en ce que** la cavité (48) s'étend radialement de part et d'autre d'un cercle primitif de rayon R centré sur l'axe de référence.

4. Cage selon l'une quelconque des revendications précédentes, **caractérisée en ce que** l'anneau extérieur (26) présente une collerette annulaire (42) faisant saillie radialement vers l'extérieur, et située, au niveau de chacune des alvéoles (32), radialement à l'extérieur de la paroi concave (36).

5. Cage selon l'une quelconque des revendications précédentes, **caractérisée en ce que** la cage (24) comporte des languettes élastiques (34) faisant saillie radialement vers l'intérieur.

6. Cage selon l'une quelconque des revendications précédentes, **caractérisée en ce qu'**elle est en matériau plastique moulé.

7. Cage selon l'une quelconque des revendications précédentes, **caractérisée en ce qu'**elle est réalisée par moulage dans un moule en deux pièces (80, 82) à déplacement axial.

8. Roulement à billes à contact oblique (10) comportant au moins une bague extérieure (12), au moins une bague intérieure (16), au moins une rangée de billes (22) roulant sur des chemins de roulement (14, 18) formés sur la bague extérieure (12) et sur la bague intérieure (16), **caractérisé en ce qu'**il comporte au moins une cage (24) selon l'une quelconque des revendications précédentes, retenant les billes (22) de la rangée de billes.

9. Roulement à billes à contact oblique selon la revendication précédente, **caractérisé en ce qu'**il comporte deux rangées de billes (22) et deux cages (24) selon l'une quelconque des revendications précédentes, disposées coaxialement à distance l'une de l'autre de manière à ce que l'anneau intérieur (28) de l'une des cages (24) fasse face à l'anneau intérieur (28) de l'autre des cages (24), chacune des cages (24) retenant les billes (22) d'une des rangées de billes.

10. Roulement à billes à contact oblique selon la revendication précédente, **caractérisé en ce qu'**il comporte une bague extérieure unique (12) à deux chemins de roulement (14).

11. Roulement à billes à contact oblique selon l'une quelconque des revendications 8 à 10, **caractérisé en ce que** la cage (24) est selon la revendication 4 et **en ce que** la bague extérieure comporte au moins un embrèvement (44) en regard de la collerette annulaire (42).
